Europäisches Patentamt

European Patent Office

Office européen des brevets

(11) Publication number: **0 222 503**
**A1**

(12) **EUROPEAN PATENT APPLICATION**

(21) Application number: **86307718.6**

(22) Date of filing: **07.10.86**

(51) Int. Cl.⁴: **G 01 N 9/00**
**G 01 L 9/00**

(30) Priority: **18.10.85 GB 8525781**

(43) Date of publication of application:
**20.05.87 Bulletin 87/21**

(84) Designated Contracting States:
**AT DE FR IT**

(71) Applicant: **SCHLUMBERGER ELECTRONICS (U.K.) LIMITED**
**124 Victoria Road**
**Farnborough Hampshire GU14 7PW(GB)**

(72) Inventor: **Stansfeld, James Wolryche**
**58 Kings Hill Beech**
**N. Alton Hants(GB)**

(72) Inventor: **Wakefield, Donald Keith**
**45 Woodbourne**
**Farnham Surrey(GB)**

(74) Representative: **Holt, Michael et al,**
**Schlumberger Electronics (UK) Limited 124 Victoria Road**
**Farnborough Hampshire GU14 7PW(GB)**

(54) **Transducers.**

(57) In a transducer of pressure and density a resonantly vibratable tubular sensing element (10) is arranged to be excited into vibration by either a first drive coil A (11) or a second drive coil B (12) dependent upon a selection via a mode select line (14), which controls changover contacts (15). The sensor is maintained in resonant vibration by means of a feedback from a pick-up coil A (16) or a pick-up coil B (17) via sustaining amplifiers A (18) or B (19). When a drive is selected a signal at the resonant frequency of vibration ($F_a$ or $F_b$) is available and the respective amplifier output (100 or 101).

The arrangement of drive means A and pick-up means A (11,16) and drive means B and pick-up means B (12,17) is not the same, but is such that different modes of vibration are excited when each drive is selected. The modes are chosen each to have different sensitivity to first and second parameters, such as pressure and density. At least one of the modes is chosen to be a complex mode, having both axial and circumferential vibration components.

The invention may be arranged to overcome the problem of for example a density transducer which would otherwise be sensitive to pressure changes or alternatively arranged to provide outputs for each parameter.

FIG.1

EP 0 222 503 A1

(27.520/3169p)

0222503

## TRANSDUCERS

This invention relates to transducers for sensing parameters of fluids, and is particularly concerned with transducers wherein an output is provided as a result of fluid influence on a resonantly vibratable tubular element, such as for example a fluid containing cylinder.

In United Kingdom Patent No. 1,175,586 there is described a fluid density transducer, wherein a hollow cylinder is excited to vibrate resonantly and the frequency of vibration sensed. The frequency of resonance is influenced by the fluid which surrounds the cylinder, and it has been found that fluid density may be measured as a result. A similar arrangement may be employed as a pressure transducer, and such is described in UK Patent 1,264,317 wherein an output dependent upon pressure difference between cylinder interior and exterior may be provided. To measure absolute pressure, a known control pressure is established in the cylinder interior or exterior.

Since vibrating element transducers are in general sensitive to both density and pressure, considerable care must be exercised in the measurement of one variable to ensure that the measurement is not erroneously influenced by the other. In the case of a density transducer, since the fluid can completely surround the vibrating element, the effect of pressure can be minimised by careful mechanical design to ensure that pressure is equalized and considerable effort has been devoted to this aspect of design. In transducers where the element is not completely surrounded, as for example where the element comprises a tube through which fluid flows, pressure sensitivity will remain a problem. The solution is to restrict use of the transducer to conditions for which a calibration has been performed.

In the case of a pressure transducer a change from one fluid to a fluid of different density will introduce an offset which may be calibrated out. For a vibrating element pressure transducer however the problem may be worse since it can be more difficult to restrict operating conditions. A pressure transducer installed in an aircraft for example will naturally be subjected to density variation with altitude change. Fortunately such density variation is often dominantly a function of temperature and arrangements in which a temperature sensor is employed to compensate transducer output have been successfully configured. However in circumstances where the density change is not a simple function of temperature, for example when measuring mixtures of different gases or when the transducer is used in a differential mode, the error cannot be temperature compensated.

For a number of measurement requirements it has been found advantageous to employ a tubular sensing element resonantly vibrated in a complex mode of vibration, that is a mode having both axial and circumferential components.

According to the present invention a transducer includes a resonantly vibratable tubular sensing element sensitive to at least first and second parameters of a fluid arranged such that a resonant frequency of vibration varies as a function of at least the first and second parameters,

drive means for exciting resonant vibration of the sensing element, and

pick-up means for sensing the frequency of vibration of the sensing element,

wherein the sensing element is arranged to have at least two modes of vibration,

and wherein the drive means is operable to excite each of the modes of vibration,

the modes of vibration being selected such that the relative effect of each parameter is different between modes and such that at least one mode of vibration is a complex mode.

Preferably means for storing measurements relating to each mode is provided, thus resonant frequency in a mode may be

stored. Since the resonant frequency is in each case differently dependent upon the fluid parameters, means may be provided to compute absolute values for at least one parameter when sufficient modes have been excited.

The modes of vibration may be selectively excited by means of altering the drive means configuration, or alternatively simultaneously excited by arranging that the nodal points of a first node are substantially coincident with the anti-nodal points of a further mode.

It will be realised that the present invention is a complete departure from standard transducer practice, wherein it is sought to minimise response to all parameters except that whose value is required. In the present invention the influence of each parameter in each mode may be comparable. Alternatively, a transducer may be provided wherein a first mode is selected to be preferentially sensitive to a first parameter and the second mode to a second parameter.

In order that features and advantages of the present invention may be appreciated an embodiment will now be described, by way of example only, with reference to the accompanying diagrammatic drawings, of which:

Figure 1 represents a transducer in accordance with the present invention showing additionally how signals may be processed,

Figure 2 represents vibration mode of a cylindrical sensor,

Figure 3 represents sensor response,

Figure 4 represents a sensor,

Figure 5 pressure sensitivity,

Figure 6 density sensitivity,

Figure 7 represents a sensor in which two vibration nodes are excited simultaneously,

Figure 8 shows detail of the excitation of the embodiment of Figure 7, and

Figure 9 represents a maintaining circuit to ensure resonance in the selected modes.

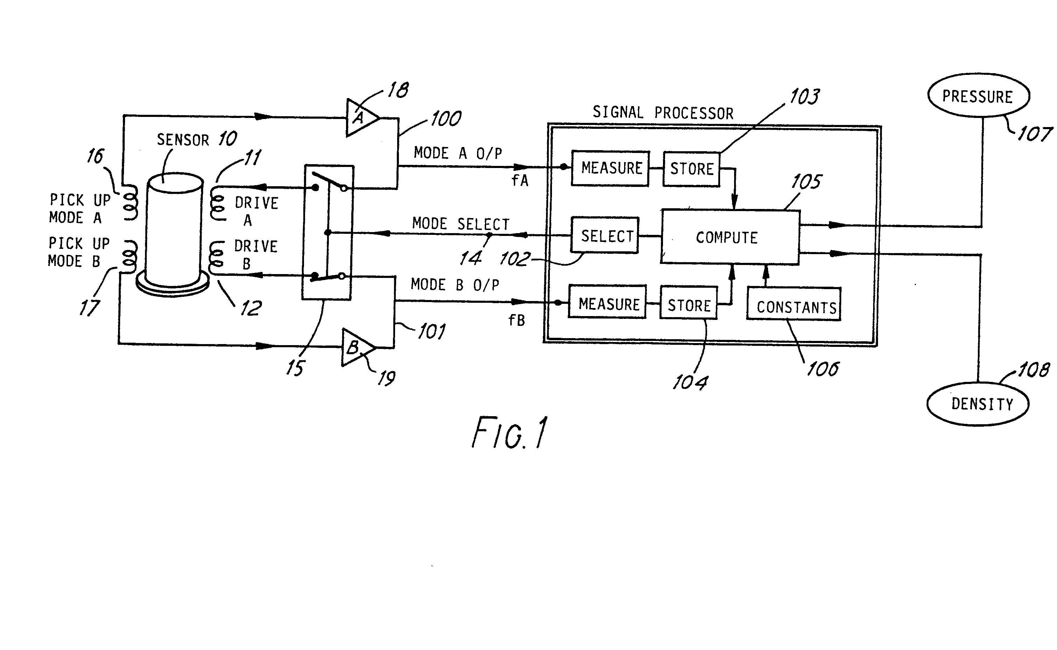

In a transducer of pressure and density (Figure 1) a resonantly vibratable sensing element 10 is arranged to be excited into vibration by either drive coil A (11) or drive coil B (12) dependent upon a selection via mode select line 14, which controls changeover contacts 15. The sensor is maintained in resonant vibration by means of feedback from pick-up coil A (16) or pick-up coil B (17) via sustaining amplifier A (18) or B (19). When a drive is selected a signal at the resonant frequency of vibration ($F_a$ or $F_b$) is available and the respective amplifier output 100 or 101.

The arrangement of drive means A and pick-up means A (11, 16) and drive means B and pick-up means B is (12, 17) is not the same, but is such that different modes of vibration are excited when each drive is selected. These different modes will be referred to as the A mode and the B mode.

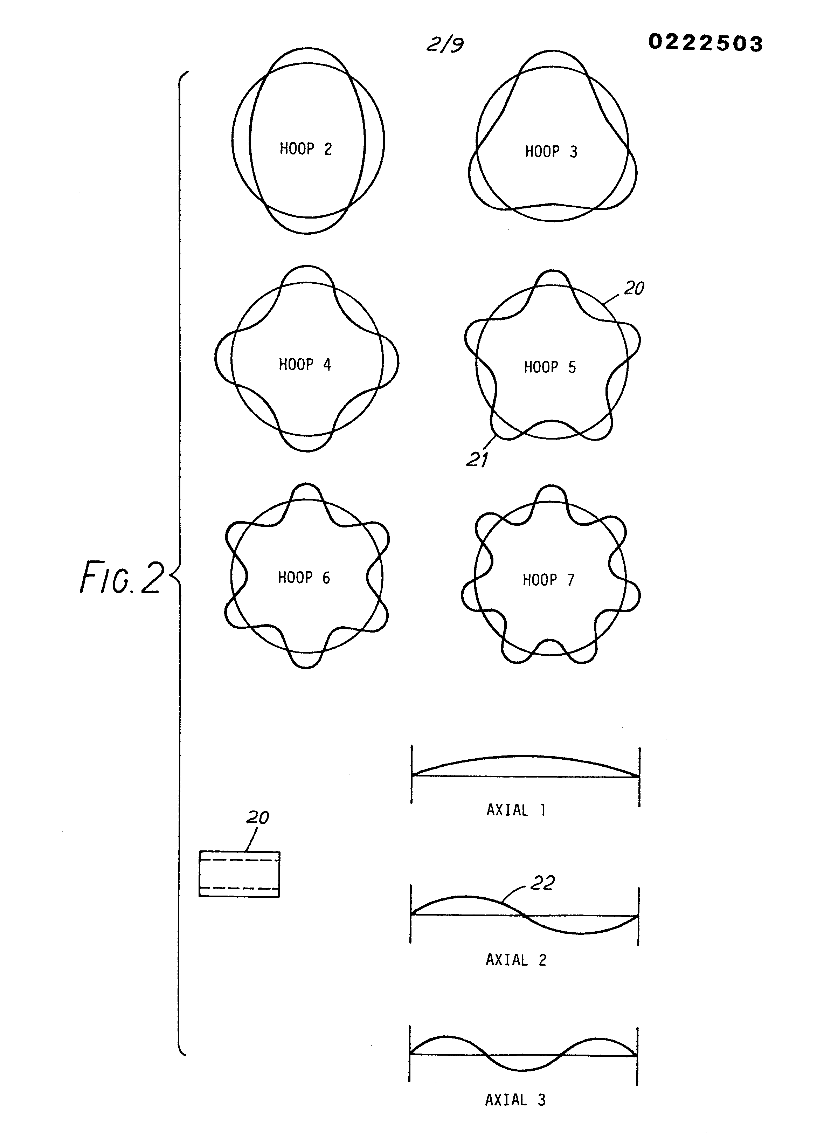

Cylindrical sensors may be vibrated in complex modes involving both axial and circumferential (or hoop) components, various hoop and axial modes are illustrated (Figure 2) for a cylindrical sensor 20 and are designated according to the number of anti-nodes present. Thus in hoop mode 5 (21) 5 anti-nodes appear around the circumference of the cylinder 20 and in axial mode 2 (22) two anti-nodes appear along its length. Complex modes are designated

H-A where H refers to the hoop mode and A to the axial mode. Thus in a particular form of the present invention mode A might be mode 4-1 and mode B might be mode 6-1.

Ways in which drive means and pick-up means may be arranged to drive a sensor in different modes will be considered in more detail hereinafter.

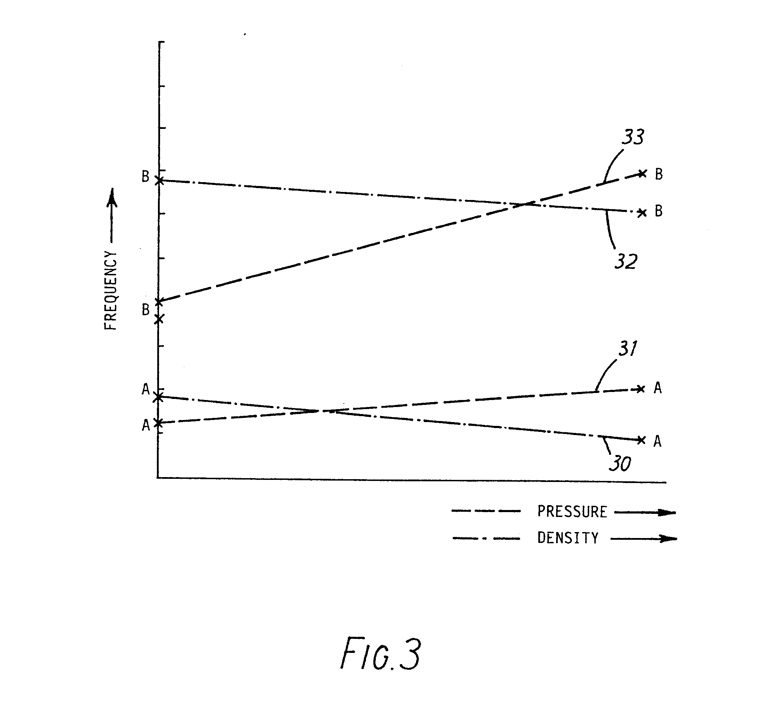

The sensor 10 is sensitive to both pressure and density parameters of a fluid (not shown) in which it may be immersed, as witnessed by a plot 30 (Figure 3) which represents the resonant frequency of vibration over a range of pressure, and a plot 31, which represents resonant frequency over a range of density. The plot pair 30, 31 are representative of that to be expected with a sensor operated in mode 3-1. A similar plot pair 32, 33 may be made for respectively pressure and density sensitivity in mode 6-1. For clarity absolute values have been omitted from Figure 3, however the plot pairs are correctly scaled so that the trends in sensor response may be observed. It will be noted that relative sensitivity to the parameters in the two modes is not the same, since plot pair 20, 21 (mode A) and 22, 33 (mode B) are not of similar appearance.

In order to to assist the understanding of the present invention, the following theoretical treatment is presented. A simple model for a vibrating cylinder sensor is:-

$$F = K \sqrt{\left[ \frac{1 + x\,P}{k + y\,\rho} \right]}$$

where F represents resonant frequency,

P pressure exerted by a surrounding fluid,

$\rho$ density of a surrounding fluid, and

K,k,x, y are sensor dependent constants, which may be experimentally determined by running the sensor in known pressure and density conditions, as is standard calibration practice.

In accordance with the present invention the sensor is arranged to be operated in two modes, thus in mode A:-

$$F_A = K_A \sqrt{ \left[ \frac{1 + x_A P}{k_A + y_A \rho} \right] }$$

and in mode B:

$$F_B = K_B \sqrt{ \left[ \frac{1 + x_B P}{k_B + y_B \rho} \right] }$$

Selecting mode A and measuring $F_A$ an expression for density may be established:-

$$\rho = \frac{K_A{}^2}{F_A{}^2 y_A} (1 + x_A P) - \frac{K_A}{y_A}$$

Selecting mode B and measuring $F_B$ an expression for pressure may be established:-

$$p = \frac{F_B{}^2}{K_B{}^2 x_B} (k_B + y_B \rho) - \frac{1}{x_B}$$

into which the expression for density may be substituted to yield an expression in a single variable P. An output value representing pressure may thereby be computed. It will be realised that this output value may be sustituted back to allow computation of density.

Against this theory, the operation of the embodiment will now be considered further. Selection means 102 (Figure 1) controls contacts 15 to select mode A, and a measurement of $F_A$ is made and stored in store 103. Similarly mode B is selected and a measurement stored in store 104. The stored values are available to a computer 105, together with previously determined sensor constants 106. It will be apparent that the computer 105 may be operated in accordance with the expressions defined above to provide a pressure output value 107 and a density output value 108. Modes A and B may be alternately selected and values stored as previously described, so that computer 105 may update output values 107, 108 dependent upon the most recent measured values. The drive to maintain vibration of the elements is arranged such that at least one of modes A or B is a complex mode of vibration.

It will be appreciated that the pressure and density output values are discontinuous in nature. Where a continuous output signal is required, for example in plant control, one or both outputs may be smoothed or interpolated in accordance with known techniques.

An embodiment of a sensor arranged for selective operation in two complex modes will now be described.

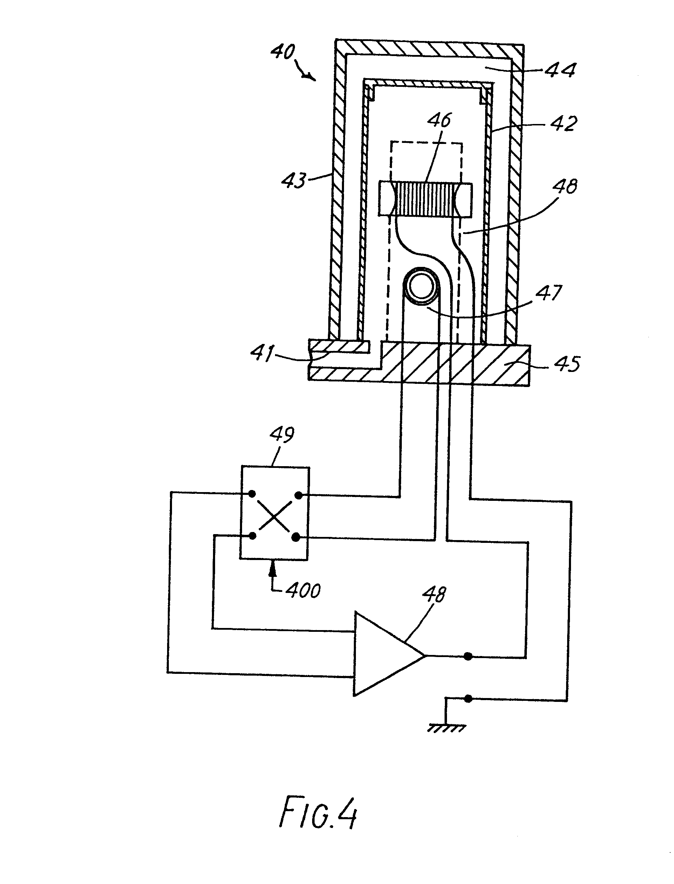

In a transducer 40 (Figure 4) for the measurement of parameters associated with a gas an inlet passage 41 allows gas to be assessed to enter the interior of a hollow closed cylinder 42. The cylinder 42 is surrrounded by a sealed container 43 and interveaning space 44

is arranged to be evacuated to provide a reference. Cylinder 42 is mounted to base plate 45 such that the cylinder is free to vibrate in response to energy supplied from an exciting coil 46 mounted within the cylinder 42 and having poles arranged adjacent the cylinder walls. Vibration of the cylinder 42 is sensed by a pick-up coil 47 and fed back to excitation coil 46 via maintaining amplifier 48. This simple feedback arrangement is sufficient to maintain the cylinder 42 in resonant vibration. Coils 46 and 47 are arranged axially normal to each other, and may be mounted within the cylinder in any convenient manner, for example by means of a non-metallic coil support member 48.

Intermediate pick-up coil 47 and maintaining amplifier 48 is a changeover switch 49 which may be controlled via control input 400 to invert the phase of the pick-up coil signal with respect to the maintaining amplifier input. Phase inversion of the pick-up coil signal effects a change of mode in the vibration of the cylinder 42. A typical cylinder fabricated in Ni-Span C stainless steel of approximate wall thickness 0.5 mm exhibits vibration in modes 4-1 and 4-2 when driven in this way.

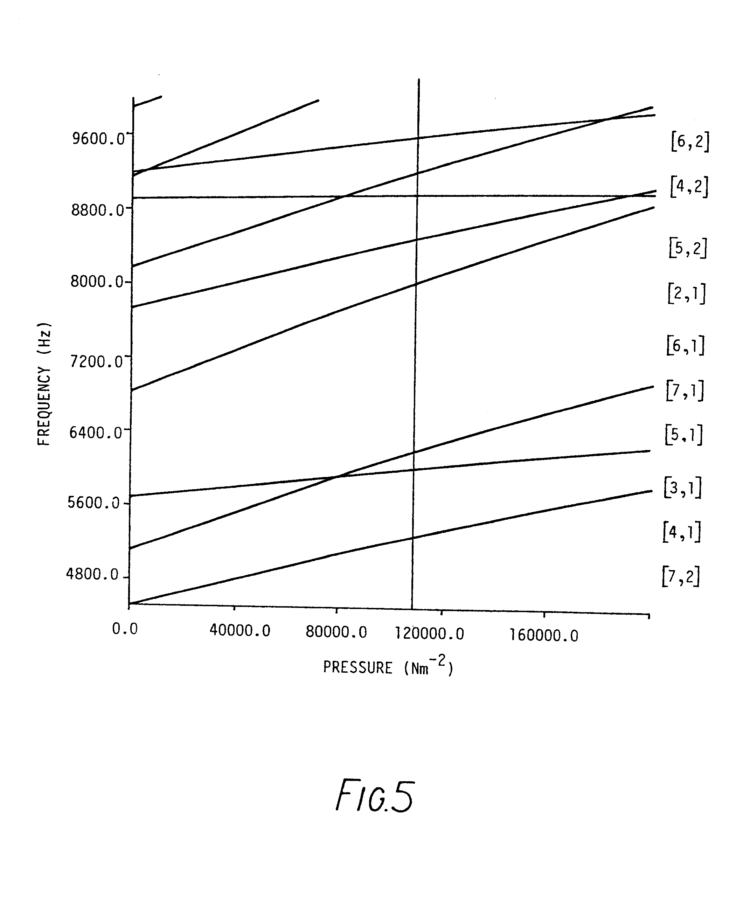

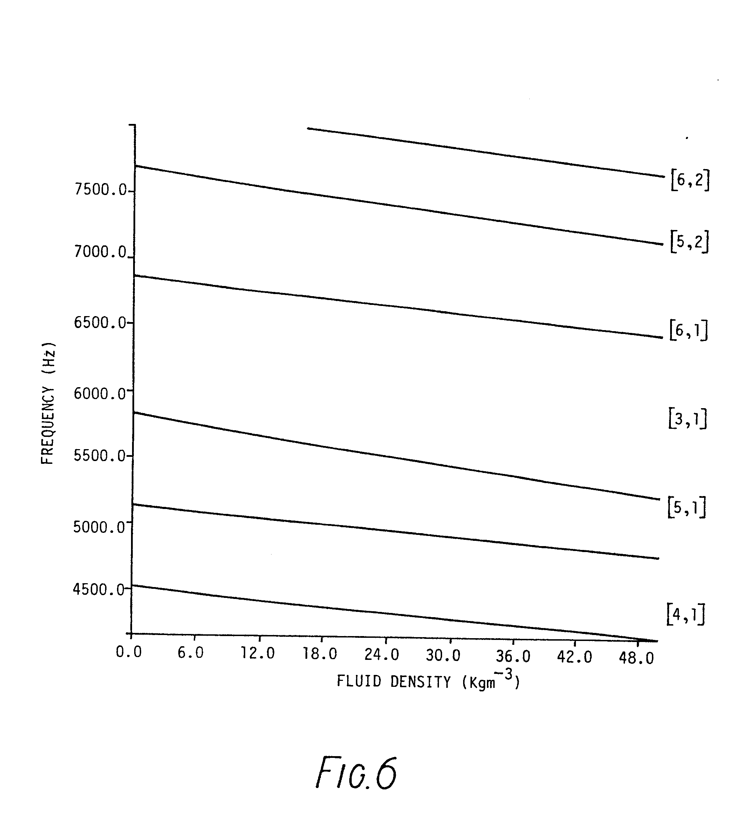

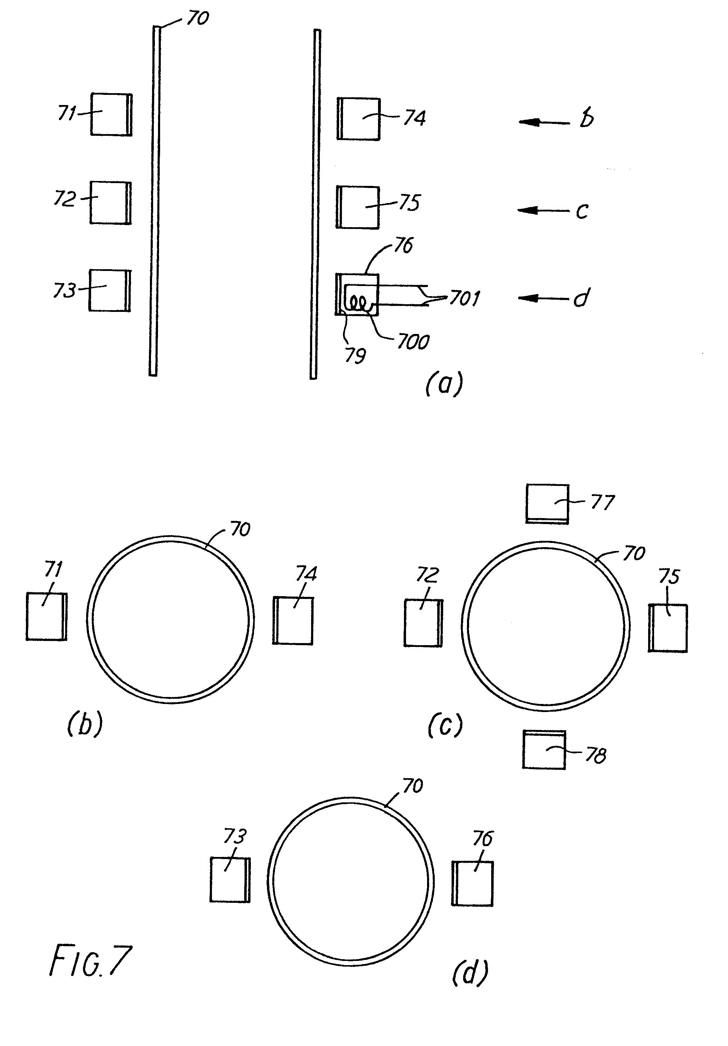

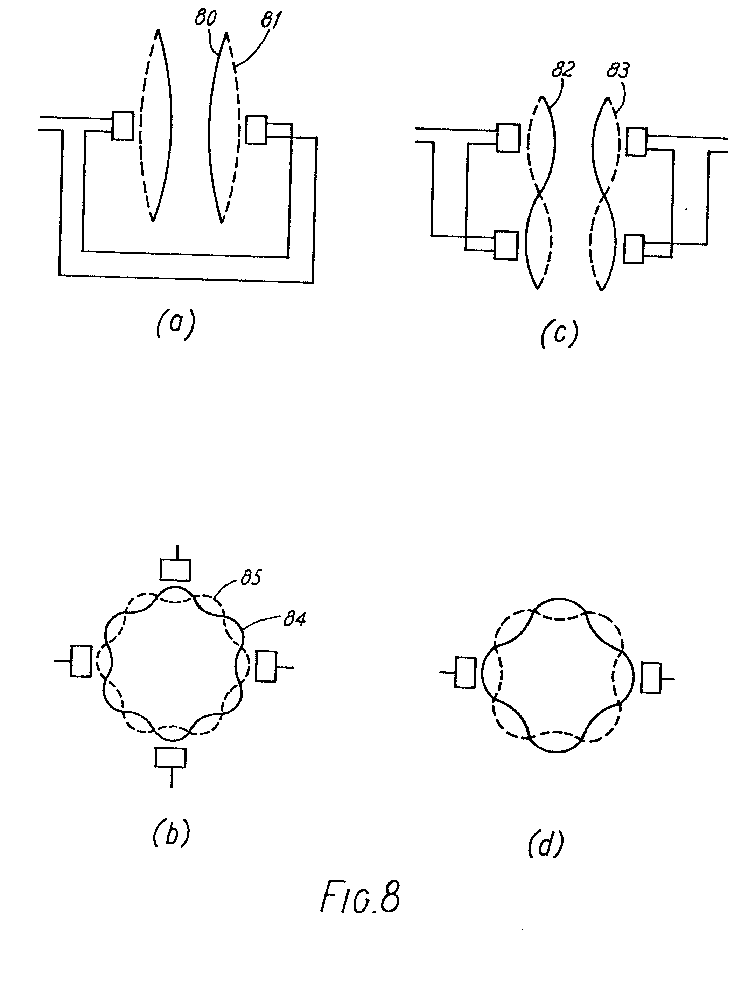

For a sensor of the type described, the pressure (Figure 5) and density (Figure 6) sensitivities have been evaluated for modes 2-1, 3-1, 4-1, 5-1, 6-1, 7-1 and modes 4-2, 5-2, 6-2 and 7-2. It will be appreciated that any conveniently excitable modes yielding the required sensitivity may be selected as mode A and mode B.

Further modes may be excited if sensitivity to other parameters is present, thus a multi-mode transducer capable of measuring a plurality of inter-related parameters may be configured if suitable modes of vibration can be excited.

A further embodiment of the present invention in which two modes of vibration are simultaneously excited will now be described.

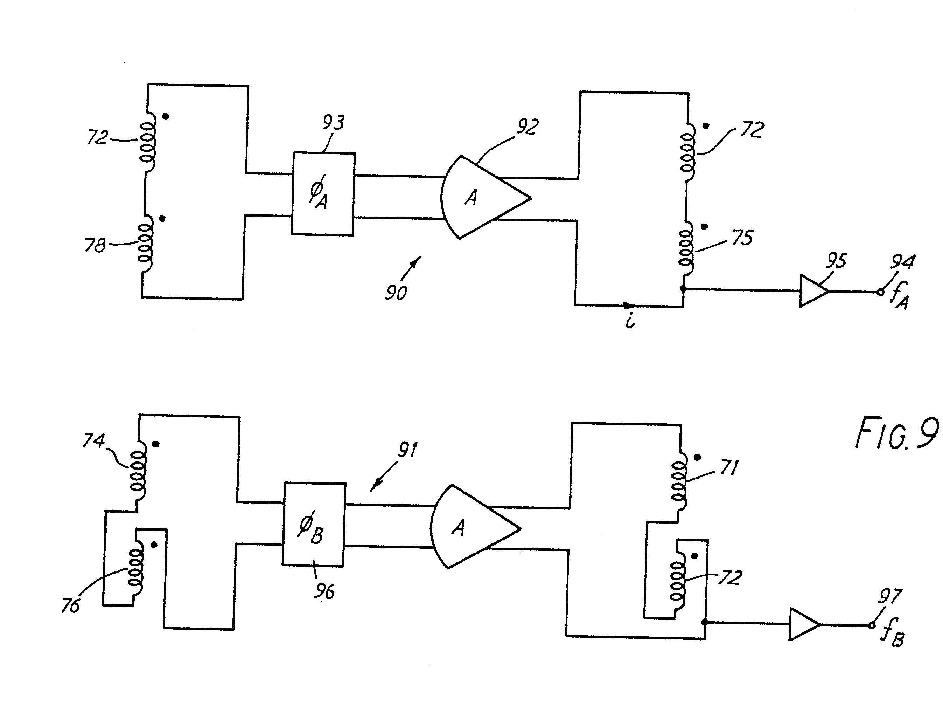

A thin walled cylinder 70 (Figure 7) has eight excitation coils 71 to 78 externally mounted around its periphery. The coils may be mounted by any suitable means, which have been omitted from Figure 7 for the purpose of clarity. The excitation coils are similar and comprise a coil winding, such as coil winding 700 of excitation coil 76 which has a connection pair 701. Excitation coil 76 is mounted such that its pole piece 79 is proximate the periphery of the cylinder 70. Typically, the pole piece might be spaced some 0.2mm from the exterior of the cylinder. Excitation coils 71 and 74, 72 and 75, and 73 and 76 are respectively mounted at one quarter, one half, and three quarters of the cylinder length in a common plane.

The arrangement of these excitation coil pairs may be appreciated more readily form Figures 7(b), 7(c), and 7(d) which represent cross-sectional views taken at these respective lengths along the cylinder 70. At half length an additional pair of excitation coils 77, 78 is mounted in a plane normal to the plane of excitation coils 72 and 75. As will be described in more detail hereinafter one of each excitation coil pair is a drive coil and one a pick-up coil. Thus in the present embodiment coils 71, 72, 73 and 75 are drive coils and coils 74, 76, 77 and 78 are pick-up coils. The coils are arranged in two groups a first group comprising coils 71, 73, 74 and 76 exciting mode 4-2 and a second group comprising coils 72, 75, 77 and 76 exciting mode 6-1. The operation of the two coil groups may be considered separately.

Injection of a current i into an excitation coil causes the wall of cylinder 70 to be pulled towards its pole piece by virtue of magnetic attraction. Excitation coils 72 and 75 are connected in series so that they act in the same phase to establish an anti-node at cylinder half length, as depicted in Figure 8(a), which shows cylinder position at one extreme 80 and at a second extreme 81, as a varying current is injected. The drive current is derived from a similarly connected pick-up pair comprising coils 77 and 78. This feedback results in resonance of the cylinder. The pick-up pair is mounted in a plane normal to the drive pair and it has been found that this results in vibration in hoop mode 6, the extremes of position (84, 85) of which are depicted in Figure 8(b).

Excitation coils 71 and 73 mounted respectively at one quarter and three quarter's length are also series connected, but in an opposing sense to establish out of phase anti-nodes at these positions. Co-operating pick-up coils 74 and 76 are similarly connected, resulting in resonance of the cylinder 70 between extremes of position 82 and 83 (Figure 8(c)). It will be appreciated that excitation coils of the first group (71, 73, 74 and 76) serve to establish resonant vibration in mode 4-2 and excitation coils of the second group (72, 75, 77 and 78) serve to establish resonant vibration in mode 6-1. As may be observed from Figure 8, modes 4-2 and 6-1 have been chosen since nodal points of mode 4-2 are anti-nodal points of 6-1, and vice versa. These modes may therefore be simultaneously excited and the resonant frequency of each mode measured and processed as aforesaid. Figure 9 is representative of a general arrangement for maintaining these two resonant modes, in which two similar channels, a 6-1 channel 90 and a 4-2 channel 91, will be observed.

Drive coils 72 and 75 and pick-up coils 77 and 78 form a feedback path via the vibrating cylinder (not shown). The gain of an amplifier 92 ensures that the loop formed thereby is self-maintaining and that resonance is thereby achieved. The signal from the pick-up coils is subjected to phase conditioning, represented as $\phi_A$, by a phase shift network 93 before application to the input of amplifier 92. Hard and fast rules for the phase shift required cannot be given since it is a function of the number of the cylinder and construction of the coils and is emperically determined. The phase conditioning function ensures that the correct vibration mode (6-1) is achieved, rather than some other mode having the same nodal pattern. An output signal 94, varying at the resonant frequency, $f_A$, of this vibration mode is picked off from the current drive to coils 72 and 75 via a conditioning amplifier 95.

The second channel 91 is essentially similar, and has a phase shift network 96 introducing phase conditioning $\phi_B$ appropriate to mode 4-2. An output 97 at the resonant frequency, $f_B$, in this mode is derived. The opposing connection of coils 74, 76 and 71, 72 respectively will be observed.

The output signal, at frequencies $f_A$ and $f_B$ may be processed as hereinbefore described to, for example, yield a pressure measurement free of density errors.

(27.520/3169p)

0222503

## CLAIMS

The matter for which the applicant seeks protection is:-

1. A transducer including a resonantly vibratable tubular sensing element sensitive to at least first and second parameters of a fluid arranged such that a resonant frequency of vibration varies as a function of at least the first and second parameters,

drive means for exciting resonant vibration of the sensing element, and

pick-up means for sensing the frequency of vibration of the sensing element,

wherein the sensing element is arranged to have at least two modes of vibration,

and wherein the drive means is operable to excite each of the modes of vibration,

the modes of vibration being selected such that the relative effect of each parameter is different between modes and such that at least one mode of vibration is a complex mode.

2. A transducer as claimed in claim 1 having means associated therewith for storing measurements relating to each mode.

3. A transducer as claimed in claim 1 or claim 2 having means associated therewith arranged to compute absolute values for at least one parameter.

4. A transducer as claimed in any preceding claim and wherein a first mode of vibration is selected to be preferentially sensitive to a first parameter and a second mode of vibration is selected to be preferentially sensitive to a second parameter.

(27.520/3169p)

**0222503**

5. A transducer as claimed in any preceding claim and having a density sensitive mode and a pressure sensitive mode.

6. A transducer as claimed in any preceding claim and wherein the modes of vibration are simultaneously excited.

7. A transducer substantially as hereindescribed with reference to the accompanying drawings.

FIG.1

HOOP 2

HOOP 3

HOOP 4

HOOP 5

_20_

_21_

HOOP 6

HOOP 7

*FIG.2*

_20_

AXIAL 1

_22_

AXIAL 2

AXIAL 3

FIG.3

FIG.4

FIG.5

0222503

FIG.6

FIG.7

(a)

(c)

(b)

(d)

FIG.8

FIG.9

European Patent Office

**EUROPEAN SEARCH REPORT**

**0222503**
Application number

EP 86 30 7718

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 524 610 (J.V. FITZGERALD et al.) * column 2, lines 3-13; column 11, lines 26-43 * | 1-4 | G 01 N 9/00 G 01 L 9/00 |
| A | THE MARCONI REVIEW, vol. XLIII, no. 218, 1980, pages 156-175, Rugby, GB; R.M. LANGDON "Vibratory process control transducers" * abstract; page 168, last paragraph; pages 172, 173 * | 1,2 | |
| A | DE-A-2 541 435 (SOLARTRON ELECTRONIC GROUP LTD.) * pages 1, 2 * | 1 | |
| A | EP-A-0 129 753 (QUARTZTRONICS INC.) * claims 1-3 * | 1 | TECHNICAL FIELDS SEARCHED (Int. Cl.4) G 01 N 9/00 G 01 N 11/00 G 01 L 9/00 G 01 N 29/00 |
| A | US-A-3 874 221 (D.J.D. LOCKIE) * abstract; column 1, lines 47-57; column 2, lines 31-33; column 5, lines 1-24 * | 1 | |
| A | US-A-4 297 872 (K. IKEDA et al.) * abstract; column 1, lines 4-15; column 2, lines 4-9; claim 1 * | 1 | |

The present search report has been drawn up for all claims

| Place of search | Date of completion of the search | Examiner |
|---|---|---|
| BERLIN | 13-01-1987 | BRISON O.P. |